# EUROPÄISCHE PATENTANMELDUNG

(11) **EP 2 905 060 A1**
(43) Veröffentlichungstag der Anmeldung: **12.08.2015**
(21) Anmeldenummer: 15152116.8
(22) Anmeldetag: 22.01.2015
(51) Int. Cl.: B01D 46/00, B01D 46/12, B01D 46/52

(54) **FILTERELEMENT**

(30) Priorität: 10.02.2014 DE 102014001607
(71) Anmelder: Carl Freudenberg KG, 69469 Weinheim (DE)
(72) Erfinder: Fickartz, Knuth, 69250 Schönau (DE); Bräunling, Volker, 64646 Heppenheim (DE)

(57) **Zusammenfassung**

Ein Filterelement (1, 1'), umfassend einen ersten Faltenbalg (2, 2'), der aus einem ersten Filtermedium (3, 3') gefertigt ist, ist im Hinblick auf die Aufgabe, ein Filterelement anzugeben, welches nach einiger Standzeit problemlos derart modifiziert werden kann, dass dieses wieder eine ausreichende Filterwirkung erzielt, dadurch gekennzeichnet, dass ein zweiter Faltenbalg (4, 4') vorgesehen ist, welcher aus einem zweiten Filtermedium (5, 5') gefertigt ist, wobei der zweite Faltenbalg (4) in eine Ausnehmung (6) des ersten Faltenbalgs (2) eingesetzt ist und wobei der Rand (7) des zweiten Faltenbalgs (4) vom ersten Faltenbalg (2) teilweise oder vollständig umgeben ist oder wobei der zweite Faltenbalg (4') derart auf den ersten Faltenbalg (2') aufgelegt ist, dass die Ausnehmung (6') durch den zweiten Faltenbalg (4') bedeckt ist und die Faltenspitzen (12') der Faltenbälge (2', 4') miteinander fluchten.

## Beschreibung

### Technisches Gebiet

Die Erfindung betrifft ein Filterelement gemäß dem Oberbegriff des Patentanspruchs 1.

### Stand der Technik

Aus dem Stand der Technik sind bereits Filterelemente bekannt, welche einen Faltenbalg aus Vliesstoff aufweisen. Ein Filterelement dieser Art ist beispielhaft aus der DE 10 2005 048 841 B3 bekannt.

Dort ist ein Luftfilter für eine Belüftungsanlage eines Kraftfahrzeugs beschrieben, welcher einen speziell ausgeformten Rahmen aufweist. Innerhalb des Rahmens ist ein erster Faltenbalg aus einem ersten Filtermedium aufgenommen. Der Rahmen ist in besonderer Weise komplementär zu einem Filtergehäuse ausgestaltet.

Die Fertigung eines Filterelementes, welches einen in besonderer Weise ausgestalteten Rahmen aufweist, ist mit hohen Kosten verbunden. Der Austausch eines solchen Filterelements, wenn dieses keine ausreichende Filterwirkung mehr entfaltet, ist daher mit relativ hohen Kosten verbunden.

### Darstellung der Erfindung

Der Erfindung liegt daher die Aufgabe zugrunde, ein Filterelement anzugeben, welches nach einiger Standzeit problemlos derart modifiziert werden kann, dass dieses wieder eine ausreichende Filterwirkung erzielt.

Die vorliegende Erfindung löst die zuvor genannte Aufgabe durch die Merkmale des Patentanspruchs 1.

Erfindungsgemäß ist erkannt worden, dass ein verbrauchtes Filterelement zur Aufnahme eines Filtereinsatzes verwendet werden kann. Der Filtereinsatz ist dabei erfindungsgemäß als zweiter Faltenbalg ausgestaltet, welcher in oder auf einer Ausnehmung des ersten Faltenbalgs eingesetzt bzw. aufgesetzt ist.

Konkret ist erkannt worden, dass durch die Kombination zweier Faltenbälge die physikalischen Eigenschaften der Oberflächenfiltration und die der Tiefenfiltration kombinatorisch genutzt werden können. Die Oberflächenfiltration findet auf dem bereits gesättigten ersten Filtermedium des ersten Faltenbalgs statt. Die Tiefenfiltration erfolgt durch das zweite Filtermedium des zweiten Faltenbalgs.

Weiter ist erkannt worden, dass die teilweise Weiterverwendung des bereits verbrauchten ersten Faltenbalgs eine teure Neuanschaffung eines kompliziert aufgebauten Filterelementes mit Rahmen nicht mehr notwendig macht. Sofern der erste Faltenbalg mit einem funktionsfähigen Rahmen mit Abdichtungs- und Führungselementen versehen ist, kann dieser Rahmen weiterhin genutzt werden.

Lediglich Bereiche des ersten Faltenbalgs, welche durch Staubeinlagerung eine verringerte Luftdurchlässigkeit aufweisen und somit zur Beeinträchtigung einer ausreichenden Luftversorgung des Fahrzeuginnenraums führen, werden durch den zweiten Faltenbalg ersetzt. So ist ein Filterelement angegeben, welches nach einiger Standzeit problemlos derart modifiziert werden kann, dass dieses wieder eine ausreichende Filterwirkung erzielt und eine ausreichende Luftdurchlässigkeit zeigt.

Folglich ist die eingangs genannte Aufgabe gelöst.

Der erste Faltenbalg könnte teilweise verbraucht sein, wobei Bereiche des ersten Faltenbalgs durch den zweiten Faltenbalg ersetzt sind, um das Filterelement derart zu modifizieren, dass dieses wieder eine ausreichende Filterwirkung erzielt und eine ausreichende Luftdurchlässigkeit zeigt. So können die physikalischen Eigenschaften der Oberflächenfiltration und der Tiefenfiltration kombinatorisch genutzt werden, indem die Oberflächenfiltration auf dem bereits gesättigten ersten Filtermedium des ersten Faltenbalgs stattfindet, wobei die Tiefenfiltration durch das zweite Filtermedium des zweiten Faltenbalgs erfolgt.

Das erste Filtermedium und das zweite Filtermedium könnten identisch sein. Vorzugsweise sind die Filtermedien aus Vliesstoffen des gleichen Typs gefertigt. Wenn das erste Filtermedium und das zweite Filtermedium identisch sind, kann das Filterelement wieder im Wesentlichen in die Beschaffenheit verbracht werden, welches es im Neuzustand hatte. Die grundsätzlichen und charakteristischen Eigenschaften des Filterelements werden hierdurch nahezu nicht oder nur unwesentlich geändert.

In den ersten Faltenbalg könnte eine Ausnehmung eingebracht sein, wobei die Kanten, welche die Ausnehmung säumen, mit einem Kantenband verbunden sind. Die Ausnehmung könnte durch Stanzen, Heißdrahtschneiden, Sägen oder ein ähnliches Verfahren eingebracht werden. Hierbei entsteht eine Kante, nämlich eine Schnittkante. Diese Kante wird mit einem Kantenband verbunden, um das Einführen des zweiten Faltenbalgs in die Ausnehmung zu erleichtern.

Vor diesem Hintergrund ist denkbar, dass die Ausnehmung eine charakteristische Form aufweist, in welche nur ein speziell für diese Ausnehmung gefertigter charakteristischer zweiter Faltenbalg einsetzbar ist.

Das Kantenband könnte selbstklebend ausgestaltet sein. Hierdurch ist eine einfache Montage möglich.

Das Kantenband könnte flexibel sein. Ein flexibles Kantenband lässt sich leicht dehnen und passt sich an umgebende Strukturen leicht an.

Der zweite Faltenbalg könnte durch einen Kantenstreifen gerahmt sein. Hierdurch ist sichergestellt, dass der Kantenstreifen sich an das Kantenband anlegt und mit diesem eine im Wesentlichen dichte Schnittstelle bildet. Vor diesem Hintergrund ist denkbar, dass der Kantenstreifen und das Kantenband miteinander stoffschlüssig verbunden werden. Konkret ist denkbar, dass das Kantenband mit dem Kantenstreifen verklebt oder verschweißt wird.

Der erste Faltenbalg könnte in einem Rahmen aufgenommen sein, wobei der Rahmen durch den zweiten Faltenbalg nicht in seiner Funktion beeinträchtigt ist. Vorteilhaft wird der Rahmen beim Einbringen der Ausnehmung in den ersten Faltenbalg nicht verändert. Hierdurch kann ein Rahmen mit speziell gefertigten Führungselementen und Abdichtungselementen weiter verwendet werden. Lediglich der erste Faltenbalg wird durch Einsetzen des zweiten Faltenbalgs bereichsweise erneuert.

Die Ausnehmung im ersten Faltenbalg kann nahezu jede Form annehmen. Es ist denkbar, dass diese rechteckförmig, oval oder kreisförmig ist. Es sind jedoch auch unregelmäßige Formen denkbar. Das Kantenband, welches die Ausnehmung säumt, weist vorzugsweise die gleiche Umfangslänge wie ein verwendetes Stanzwerkzeug auf. Das Kantenband kann flexibel und perforiert sein.

Es ist denkbar, dass auf den verbrauchten ersten Faltenbalg ein Biospray aufgebracht ist. Es sind auch andere hygienische Maßnahmen bzw. Mittel aller Art zur Herstellung von hygienischen Verhältnissen denkbar. Durch das Ersetzen von Teilen des ersten Faltenbalgs wird eine Kohlendioxidreduktion bewirkt. Es wird nämlich nur verbrauchtes Material ersetzt, sodass ein ressourcenschonender Aufbau eines Filterelements realisierbar ist. Ein Polypropylen-Rahmen kann mehrfach verwendet werden, wodurch die Umwelt geschont wird.

Es ist sogar denkbar, dass in einen ersten Faltenbalg zu einem gewissen Zeitpunkt eine erste Ausnehmung eingebracht wird, in welche ein zweiter Faltenbalg eingesetzt wird, wobei nach Verbrauch des zweiten Faltenbalgs eine weitere, nämlich größere Ausnehmung eingestanzt wird, um einen neueren zweiten Faltenbalg aufzunehmen. Dies kann so lange fortgesetzt werden, bis das Einbringen der Ausnehmung den Rahmen des Filterelements verändern würde. Insoweit ist ein verbrauchtes Filterelement mehrfach regenerierbar, wenn nur das Einbringen der Ausnehmung bzw. der Ausnehmungen in geeigneter Weise erfolgt.

Bei einem Verfahren könnten durch Verwendung eines Filterelements der hier beschriebenen Art die physikalischen Eigenschaften der Oberflächenfiltration und der Tiefenfiltration kombinatorisch genutzt werden, indem die Oberflächenfiltration auf dem bereits gesättigten ersten Filtermedium des ersten Faltenbalgs stattfindet, wobei die Tiefenfiltration durch das zweite Filtermedium des zweiten Faltenbalgs erfolgt. Durch ein solches Verfahren können gebrauchte Filtermedien sinnvoll verwendet werden.

### Kurzbeschreibung der Zeichnung

In der Zeichnung zeigen
- Fig. 1: eine schematische Darstellung eines Filterelements, dessen erster Faltenbalg eine Ausnehmung aufweist, in welche ein zweiter Faltenbalg eingefügt wird,
- Fig. 2: eine weitere Ansicht eines weiteren Filterelements, dessen erster Faltenbalg eine Ausnehmung aufweist, die dadurch entstanden ist, dass verbrauchtes Filtermedium entfernt ist, und
- Fig. 3: das Filterelement gemäß Fig. 2., wobei dargestellt ist, dass die Ausnehmung durch neues Filtermedium bedeckt ist.

### Ausführung der Erfindung

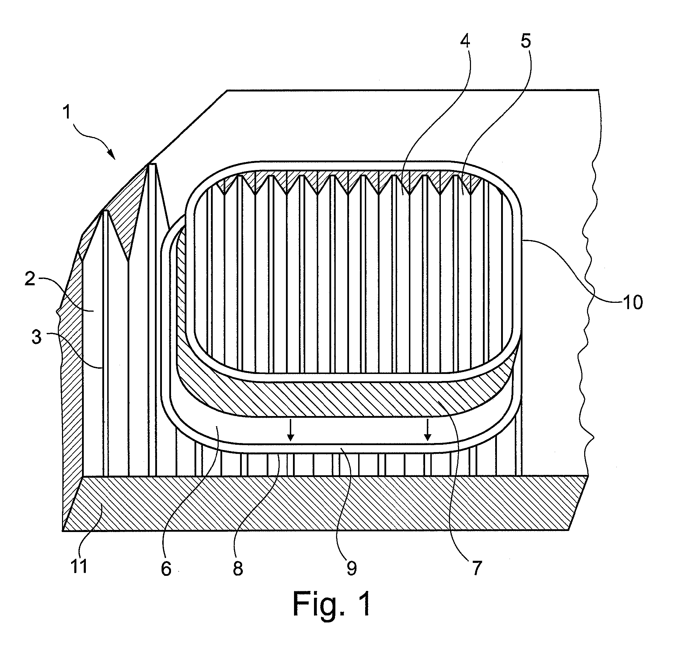

Fig. 1 zeigt ein Filterelement 1, umfassend einen ersten Faltenbalg 2 der aus einem ersten Filtermedium 3 gefertigt ist. Es ist ein zweiter Faltenbalg 4 vorgesehen, welcher aus einem zweiten Filtermedium 5 gefertigt ist, wobei der zweite Faltenbalg 4 in eine Ausnehmung 6 des ersten Faltenbalgs 2 eingesetzt ist und wobei der Rand 7 des zweiten Faltenbalgs 4 vom ersten Faltenbalg 2 teilweise oder vollständig umgeben ist.

Im konkret gezeigten Ausführungsbeispiel ist der Rand 7 des zweiten Faltenbalgs 4 vollständig vom ersten Faltenbalg 2 umgeben.

Der erste Faltenbalg 2 ist teilweise verbraucht, wobei Bereiche des ersten Faltenbalgs 2 durch den zweiten Faltenbalg 4 ersetzt sind, um das Filterelement 1 derart zu modifizieren, dass dieses wieder eine ausreichende Filterwirkung erzielt und eine ausreichende Luftdurchlässigkeit zeigt.

Das erste Filtermedium 3 und das zweite Filtermedium 5 sind identisch, sind nämlich aus einem Vliesstoff gleichen Typs gefertigt.

In den ersten Faltenbalg 2 ist eine Ausnehmung 6 eingebracht, wobei die Kante 8, welche die Ausnehmung 6 säumt, mit einem Kantenband 9 verbunden ist.

Das Kantenband 9 ist selbstklebend ausgestaltet und flexibel. Das Kantenband 9 ist aus einem Vliesstoff gefertigt.

Der zweite Faltenbalg 4 ist durch einen Kantenstreifen 10 gerahmt. Der Kantenstreifen 10 ist aus einem Vliesstoff gefertigt.

Der erste Faltenbalg 2 ist in einem Rahmen 11 aufgenommen, wobei der Rahmen 11 durch den zweiten Faltenbalg 4 nicht in seiner Funktion und/oder Struktur beeinträchtigt ist.

Mit diesem Filterelement 1 ist ein Verfahren durchführbar, bei welchem durch Verwendung des Filterelements 1 die physikalischen Eigenschaften der Oberflächenfiltration und der Tiefenfiltration kombinatorisch genutzt werden, indem die Oberflächenfiltration auf dem bereits gesättigten ersten Filtermedium 3 des ersten Faltenbalgs 2 stattfindet, wobei die Tiefenfiltration durch das zweite Filtermedium 5 des zweiten Faltenbalgs 4 erfolgt.

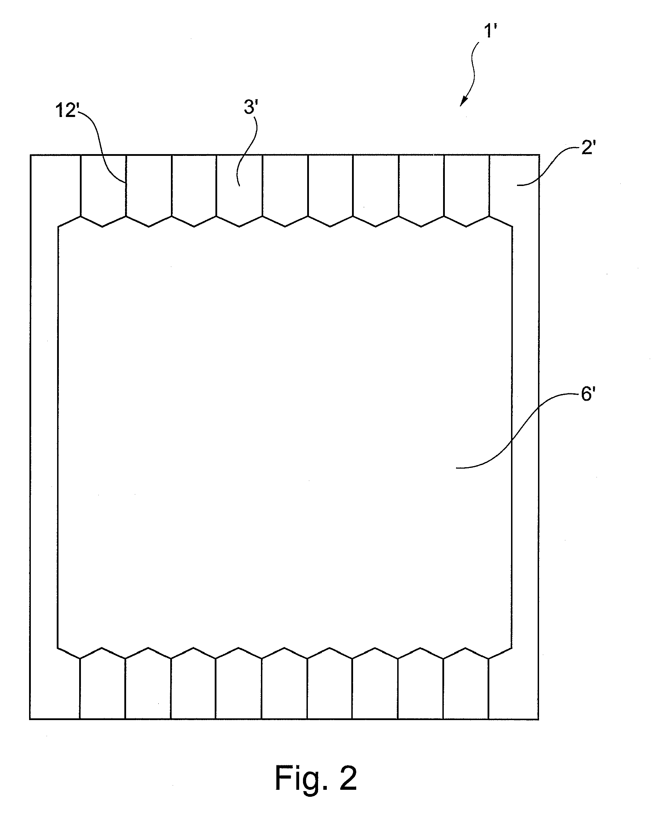

Fig. 2 zeigt ein Filterelement 1', umfassend einen ersten Faltenbalg 2', der aus einem ersten Filtermedium 3' gefertigt ist. In das erste Filtermedium 3' ist eine Ausnehmung 6' eingebracht, da verbrauchtes Filtermedium 3' bereichsweise entfernt ist.

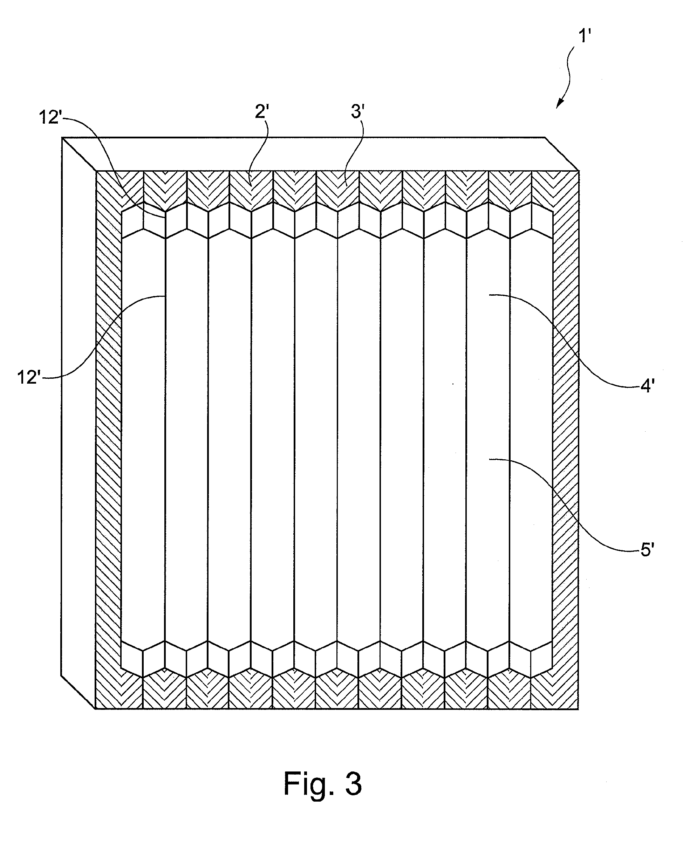

Fig. 3 zeigt ein Filterelement 1' gemäß Fig. 2, umfassend einen ersten Faltenbalg 2', der aus einem ersten Filtermedium 3' gefertigt ist. Es ist ein zweiter Faltenbalg 4' vorgesehen, welcher aus einem zweiten Filtermedium 5' gefertigt ist, wobei der zweite Faltenbalg 4' derart auf den ersten Faltenbalg 2' aufgelegt ist, dass die Ausnehmung 6' durch den zweiten Faltenbalg 4' bedeckt ist und die Faltenspitzen 12' der Faltenbälge 2', 4' miteinander fluchten. Konkret greifen die Faltenspitzen 12' des ersten Faltenbalgs 2' in die Faltentäler des zweiten Faltenbalgs 4' ein, wenn der zweite Faltenbalg 4' auf den ersten Faltenbalg 2' aufgesetzt ist.

Das zweite Filtermedium 5' ist mit dem ersten Filtermedium 3' derart verbunden, dass das erste Filtermedium 3' an allen vier Seiten der Ausnehmung 6' überlappt ist. Das zweite Filtermedium 5' kann mit dem ersten Filtermedium 3' verschweißt, verklebt oder in anderer Weise dicht verbunden sein.

Auch mit diesem Filterelement 1' ist das zuvor beschriebene Verfahren durchführbar.

## Patentansprüche

1. Filterelement (1, 1'), umfassend einen ersten Faltenbalg (2, 2'), der aus einem ersten Filtermedium (3, 3') gefertigt ist,
**dadurch gekennzeichnet, dass** ein zweiter Faltenbalg (4, 4') vorgesehen ist, welcher aus einem zweiten Filtermedium (5, 5') gefertigt ist, wobei der zweite Faltenbalg (4) in eine Ausnehmung (6) des ersten Faltenbalgs (2) eingesetzt ist und wobei der Rand (7) des zweiten Faltenbalgs (4) vom ersten Faltenbalg (2) teilweise oder vollständig umgeben ist oder wobei der zweite Faltenbalg (4') derart auf den ersten Faltenbalg (2') aufgelegt ist, dass die Ausnehmung (6') durch den zweiten Faltenbalg (4') bedeckt ist und die Faltenspitzen (12') der Faltenbälge (2', 4') miteinander fluchten.

2. Filterelement nach Anspruch 1, **dadurch gekennzeichnet, dass** der erste Faltenbalg (2, 2') teilweise verbraucht ist, wobei Bereiche des ersten Faltenbalgs (2, 2') durch den zweiten Faltenbalg (4, 4') ersetzt sind, um das Filterelement (1, 1') derart zu modifizieren, dass dieses wieder eine ausreichende Filterwirkung erzielt und eine ausreichende Luftdurchlässigkeit zeigt.

3. Filterelement nach Anspruch 1 oder 2, **dadurch gekennzeichnet, dass** das erste Filtermedium (3, 3') und das zweite Filtermedium (5, 5') identisch sind.

4. Filterelement nach einem der voranstehenden Ansprüche, **dadurch gekennzeichnet, dass** in den ersten Faltenbalg (2) eine Ausnehmung (6) eingebracht ist, wobei die Kante (8), welche die Ausnehmung (6) säumt, mit einem Kantenband (9) verbunden ist.

5. Filterelement nach Anspruch 4, **dadurch gekennzeichnet, dass** das Kantenband (9) selbstklebend ausgestaltet ist.

6. Filterelement nach Anspruch 4 oder 5, **dadurch gekennzeichnet, dass** das Kantenband (9) flexibel ist.

7. Filterelement nach einem der voranstehenden Ansprüche, **dadurch gekennzeichnet, dass** der zweite Faltenbalg (4) durch einen Kantenstreifen (10) gerahmt ist.

8. Filterelement nach einem der voranstehenden Ansprüche, **dadurch gekennzeichnet, dass** der erste Faltenbalg (2, 2') in einem Rahmen (11) aufgenommen ist, wobei der Rahmen (11) durch den zweiten Faltenbalg (2, 2') nicht in seiner Funktion beeinträchtigt ist.

9. Verfahren, bei welchem durch Verwendung eines Filterelements (1, 1`) nach einem der voranstehenden Ansprüche die physikalischen Eigenschaften der Oberflächenfiltration und der Tiefenfiltration kombinatorisch genutzt werden, indem die Oberflächenfiltration auf dem bereits gesättigten ersten Filtermedium (3, 3') des ersten Faltenbalgs (2, 2') stattfindet, wobei die Tiefenfiltration durch das zweite Filtermedium (5, 5') des zweiten Faltenbalgs (4, 4') erfolgt.
